# EUROPEAN PATENT APPLICATION

(11) **EP 1 387 548 A1**
(43) Date of publication of application: **04.02.2004**
(21) Application number: 02388047.9
(22) Date of filing: 30.07.2002
(51) Int. Cl.: H04L 29/06

(54) **A method of pre-processing a packed message with at least two-elements**

(71) Applicant: Telefonaktiebolaget L M Ericsson (Publ), 126 25 Stockholm (SE)
(72) Inventor: Sassi, Jari, 226 57 Lund (SE); Johannesson, Regina, 226 47 Lund (SE)
(74) Representative: Sigh, Erik

(57) **Abstract**

A received packet of packed elements is unpacked element by element. According to the invention it is checked for each unpacked element whether the received packet can possibly be addressed for the receiver. If a syntax match is determined, it is checked whether the unpacked element is an address element, and only if the addressed matches with the identity of the receiver, ie it is addressed to the receive, is the rest of the received packet unpacked. In mobile communications devices processor resources and battery power is saved

## Description

### Field of the invention

This invention relates to wireless receivers for receiving packed or compressed digital messages that are transmitted from a base station. The base station serves a plurality of receivers in its geographical area of coverage called a cell. Messages are paging messages or dedicated messages that are addressed to a particular receiver among a plurality of receivers served by the same transmitter. The receivers thus share the dedicated channel.

### Technical background of the invention

In wireless systems for mobile communication such as the GPRS (General Packet Radio Services) and the UMTS (Universal Mobile Telecommunications System) there will typically be many active mobile stations in each cell. Each message from the base station is addressed for a particular receiver and is broadcast over the entire cell or a subdivision of the cell, and each active mobile station in the cell will thus receive all messages that are broadcast from the base station including in particular messages addressed to other mobile stations in the cell. Each mobile station must examine at least the address of each received message and determine whether the message is addressed for the mobile station it self or for another receiver or mobile station. Messages addressed for other mobile stations will be ignored or discarded, and only messages addressed for the particular mobile station will be executed.

In the GPRS and UMTS communications systems messages are compressed or packed prior to transmission as discrete packets in order to increase the transmission capacity, and received packets are then unpacked in the receivers. In GPRS the language CSN. 1 (Concrete Syntax Notation One) is used for compression or packing, and in UMTS the language ASN. 1 (Abstract Syntax Notation One) is used. Packets, which are received by a mobile station, are first unpacked and then checked for their destination address. If the packet is addressed for another mobile station, the message will be discarded or ignored, and processor power has been spent on unpacking an irrelevant message. The procedure of unpacking each received message is power consuming, and with the existing compilers for the CSN. 1 and ASN. 1 it is not possible to rationalise and improve the unpacking procedure.

### Object of the invention

It is the object of the invention to improve and rationalise the unpacking procedure in order to save processor power, whereby the processor power can be used for other purposes. Furthermore, also battery power can be saved.

### Summary of the invention

This object is achieved by applying the method of the invention. According to the invention, for each received packed message, the received message is unpacked element by element, and each unpacked element is checked for syntax match with the expected syntax. If a syntax match is determined, it is checked whether the unpacked element is an address element, and only if the addressed matches with the identity of the receiver, is the rest of the received packet unpacked.

By the method of the invention it can in most cases be determined already at an early stage during unpacking, and without having to unpack each received message completely, whether or not the received message is addressed for the receiver, and if it is determined that the received message cannot possibly be addressed to the receiver, then the received message is ignored without unpacking the rest of the message, whereby processor resources and battery power is saved. In traffic mode the transmitting base station will often transmit packed messages to several mobile stations or other receivers in the cell, and each receiver should only process the messages addressed to it. In stand-by or sleep mode it is necessary for the mobile receiver to be alert and to react to all messages addressed to the receiver. In any case, messages not addressed to the individual receiver are irrelevant to the receiver and should be ignored.

With the invention received packed messages are unpacked element by element, each new element that is unpacked, is immediately checked for a possible match with the identity of the receiver, and as soon as a mismatch is found, which means that the received message cannot possibly be addressed for the receiver, the message is ignored without further unpacking and processing of the message.

### Brief description of the drawings

Figure 1 shows schematically a base station and mobile stations served by the base station,
Figure 2 shows schematically possible data structures of received packets, and
Figure 3 shows a flow chart of the unpacking method of the invention.

### Detailed description of the invention

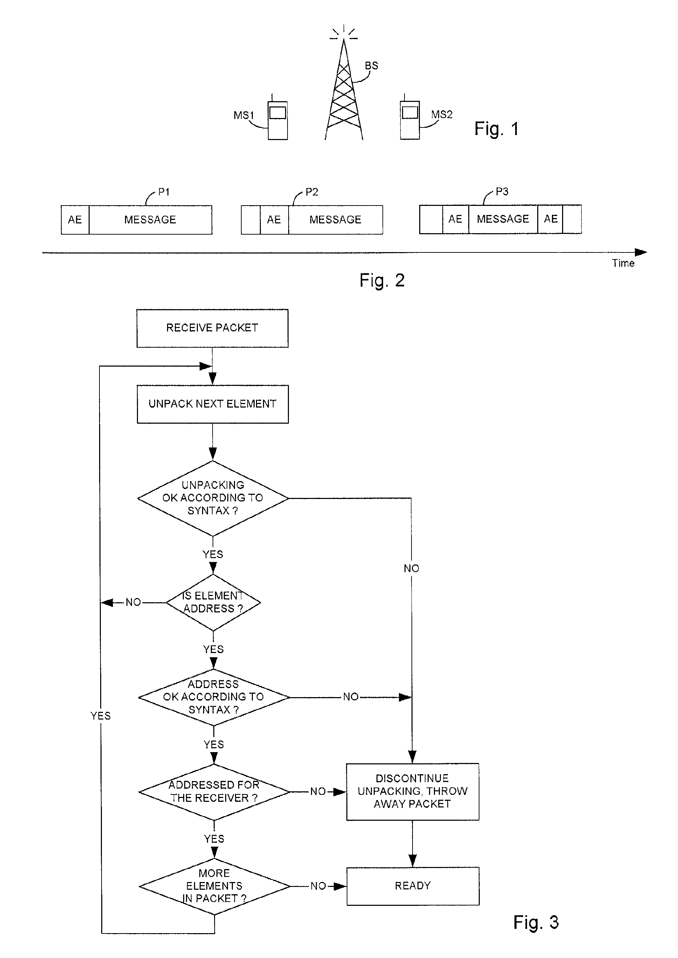

In figure 1 is shown a base station BS and two portable communications devices such as mobile stations MS1 and MS2 in the cell served by the base station BS. In practice there can be a large number of mobile stations served by the same base station.

In figure 2 is shown three packets P1, P2 and P3 transmitted by the base station and received by the active mobile stations in the cell served by the base station. Each packet is shown with one or more address elements AE and a message block. The address elements AE can be in a header portion of the packets as in the packet P1 or within the packet as in the packets P2 and P3, and there can be more than one address element as in the packet P3. The packets are packed or compressed using eg the CSN. 1 or the ASN. 1 languages or other suitable language using a grammatical structure. In practice the different parts of the packets will be packed in a more complex way depending on the type of packet.

Figure 3 is a flow chart that schematically shows how packed messages received by a mobile station are pre-processed according to the method of the invention. Having been started the mobile station enters a loop (not shown) waiting to receive a message. When a message has been received, a first element of the received message is unpacked according to a proper unpacking algorithm in order to restore the element. After unpacking the element it is checked whether the unpacking was syntactically correct. If not, unpacking of the received packet is discontinued, and the unpacking process enters a ready mode. If the unpacking was syntactically correct, it is checked whether the unpacked element is an address element, and if not, a further element is unpacked. If the element is an address element, it is checked whether the address is in accordance with the syntax used, and if not, unpacking of the received packet is discontinued, and the unpacking process enters the ready mode. If the address is in accordance with the syntax used, it is checked whether the address element matches with the identity of the receiver as stored eg in the SIM (Subscriber Identity Module), ie whether the packet is addressed for the receiver, and if not, unpacking of the received packet is discontinued, and the unpacking process enters the ready mode. If the packet is addressed for the receiver, it is checked whether there are more elements in the packet, and of not, the unpacking process enters the ready mode. If there are more elements in the packet, the next element is unpacked etc. In the ready mode the unpacking process is ready to receive a new packet. When a packet that is addressed for the receiver, is unpacked as described here, the receiver processes the message.

With the above-described method the unpacking is discontinued as soon as it has been determined that an unpacked element does not have the correct or expected syntax, or that an unpacked address element indicates that the packet is not addressed for the receiver and thus irrelevant. Received packets that are irrelevant to the receiver are thereby not unpacked, and processor resources can be used for relevant purposes.

The method of the invention is not limited to certain address types but can be used for unpacking packed messages with a variety of address types such as IMSI, TIMSI, PTIMSI, TLLI, TFI and TQI, which are used depending on the actual state of communication. Eg the TQWI (Temporary Queue Identifier) is used when the channel is occupied, in which case the mobile station will receive a TQI. When the channel is no longer occupied and is ready to serve the mobile station, another TQI is transmitted to the mobile station. The addresses are used dynamically, and each mobile station can have several types of addresses that change dynamically over time according to the actual conditions.

## Claims

1. A method of processing a packet of packed elements received by a receiver, the method comprising the pre-processing steps of
A) unpacking an element of the received packet, and
B) determining, based on the unpacked element, whether the received packet can or cannot possibly be addressed for the receiver, and
C1) if it has been determined that the received packet cannot possibly be addressed for the receiver, then ignoring the received packet without unpacking further elements,
or
C2) if it has been determined that the received packet can possibly be addressed for the receiver, then
D1) if all elements have not been unpacked, repeating from step A),
or
D2) if all elements have been unpacked, terminating the pre-processing of the packet.

2. A method according to claim 1, wherein step B) of determining whether the received packet can or cannot possibly be addressed for the receiver includes the step of checking whether a syntax of the unpacked element matches with an expected syntax, and
E1) if the syntax of the unpacked element does not match with the expected syntax then ignoring the received packet without unpacking further elements,
or
E2) if the syntax of the unpacked element matches with the expected syntax then continuing after step B).

3. A method according to claim 1, wherein step B) of determining whether the received packet can or cannot possibly be addressed for the receiver includes the step of determining whether the unpacked element is an address (AE), and
F1) if the unpacked element is not an address (AE), then repeating from step A),
or
F2) if the unpacked element is an address (AE), then checking whether a syntax of the address element (AE) matches with an expected address syntax, and
G1) if the syntax of the address element (AE) does not match with the expected address syntax, then ignoring the received packet without unpacking further elements,
or
G2) if the syntax of the address element (AE) matches with the expected address syntax then continuing after step B).

4. A method according to claim 3, wherein, the step of determining whether the unpacked element is an address (AE) comprises comparing the unpacked element to the identity of the receiver.

5. A method according to claim 1, comprising processing of unpacked elements.

6. A method according to claim 5, wherein processing of unpacked elements is performed after the pre-processing of the packet has been terminated.

7. Use of the method of any one of claims 1-6 in a wireless portable communications device.

8. Use according to claim 7 where the portable communications device is a mobile telephone.

9. A receiver for receiving packets of packed elements, the receiver being adapted to process received packets of packed elements according to the method of any one of claims 1-6.

10. A receiver according to claim 9, the receiver being a wireless portable communications device.

11. A receiver according to claim 10, the receiver being a mobile telephone.
